Europäisches Patentamt

European Patent Office

Office européen des brevets

(11) Veröffentlichungsnummer: **0 503 115 A1**

## EUROPÄISCHE PATENTANMELDUNG

(21) Anmeldenummer: **91103860.2**

(22) Anmeldetag: **13.03.91**

(51) Int. Cl.5: **C02F 3/12, C02F 1/44**

(43) Veröffentlichungstag der Anmeldung:
**16.09.92 Patentblatt 92/38**

(84) Benannte Vertragsstaaten:
**AT BE CH DE DK ES FR GB GR IT LI LU NL SE**

(71) Anmelder: **WEHRLE-WERK AG**
**Bismarckstrasse 1-11, Postfach 11 10**
**W-7830 Emmendingen(DE)**

(72) Erfinder: **Wagner, Friedrich, Dr.-Ing.**
**Weidweg 12**
**W-7803 Heuweiler 1(DE)**
Erfinder: **Wienands, Herbert, Dipl.-Ing.**
**Binäcker 16**
**W-7835 Teningen 2(DE)**
Erfinder: **Rautenbach, Robert, Prof. Dr.-Ing.**
**Nieuwe Hertogenweg 20**
**NL-6291 BP Vaals(NL)**
Erfinder: **Mellis, Rainer, Dipl.-Ing.**
**Steppenbergallee 47**
**W-5100 Aachen(DE)**
Erfinder: **Die anderen Erfinder haben auf ihre Nennung verzichtet**

(74) Vertreter: **Patentanwälte Leinweber & Zimmermann**
**Rosental 7/II Aufg.**
**W-8000 München 2(DE)**

(54) Verfahren und Vorrichtung zur biologischen Reinigung von mit biologisch schwer oder nicht abbaubaren Inhaltsstoffen organisch belasteten Abwässern.

(57) Es wird ein Verfahren zur biologischen Reinigung von mit biologisch schwer oder nicht abbaubaren Inhaltsstoffen organisch belasteten Abwässern beschrieben. Gemäß der Erfindung werden die biologisch schwer oder nicht abbaubaren Inhaltsstoffe abgetrennt und zu einem Konzentrat aufkonzentriert, das Konzentrat physikalisch und/oder chemisch behandelt und das behandelte Konzentrat einer biologischen Umsetzung unterzogen, oder alternativ das behandelte Konzentrat vom zu reinigenden Abwasser getrennt. Eine Vorrichtung zur Durchführung des Verfahrens enthält einen der Aufkonzentrierung der biologisch schwer oder nicht abbaubaren Inhaltsstoffe des Abwassers dienenden Filtrationsvorlagebehälter (15) und eine daran angeschlossene Membran- oder Nanofiltrationseinrichtung (19), in der die biologisch schwer oder nicht abbaubaren Inhaltsstoffe zurückgehalten werden und der eingangsseitig das Abwasser mit den aufkonzentrierten biologisch schwer oder nicht abbaubaren Inhaltsstoffen (29) zugeführt und von der ausgangsseitig das gereinigte Abwasser (24) abgeleitet wird.

## TECHNISCHES GEBIET

Die Erfindung betrifft ein verfahren zur biologischen Reinigung von mit biologisch schwer oder nicht abbaubaren Inhaltsstoffen organisch belasteten Abwässern, sowie eine Vorrichtung zur Durchführung des Verfahrens. Insbesondere betrifft die Erfindung ein Verfahren zur biologischen Reinigung von Abwasser, das den biologischen Abbau der gesamten organischen, auch ursprünglich biologisch schwer oder nicht abbaubaren Stoffe bis in den Spurenbereich hinein und die Entnahme von nicht abbaubaren Stoffen ermöglicht, sowie eine Vorrichtung zur Durchführung dieses Verfahrens.

## STAND DER TECHNIK

Es ist bekannt, mit organischen Inhaltsstoffen belastete Abwässer einer biologischen Reinigung zu unterziehen, wobei die organischen Abwasserinhaltsstoffe mikrobiell umgesetzt werden. Bei der mikrobiellen Umsetzung werden die Abwasserinhaltsstoffe unter Bildung von biologischem Schlamm in unschädliche Stoffwechselprodukte und körpereigene Substanz umgewandelt. Der biologische Schlamm kann entweder durch eine Trennung aufgrund unterschiedlicher Dichte in Absetz- oder Flotationsanlagen abgetrennt werden oder unter Erzielung einer praktisch vollständigen Fest-Flüssig-Trennung mit sehr hohem Reinheitsgrad durch Filtration in einem Membran- oder Ultrafilter.

Ein Verfahren der letztgenannten Art, bei dem die mikrobielle Umsetzung unter Überdruck erfolgt und die Abtrennung des behandelten Abwassers vom biologischen Schlamm durch Filtration in einem Membran- oder Ultrafilter vorgenommen wird, ist aus der DE 37 09 174 C2 bekannt, auf die hier hinsichtlich der Einzelheiten mikrobieller Umsetzung unter Überdruck und der Abtrennung des behandelten Abwassers vom biologischen Schlamm durch Membran- oder Ultrafiltration ausdrücklich Bezug genommen wird.

Das aus der DE 37 09 174 C2 bekannte Verfahren ist überaus erfolgreich bei der Reinigung von mit biologisch abbaubaren organischen Inhaltsstoffen belasteten Abwässern. Bei diesem Verfahren, bei dem die Umsetzung unter Überdruck erfolgt, lassen sich durch die vollständige Fest-Flüssig-Trennung, die weitgehend unabhängig von den physikalischen Eigenschaften der Mikroorganismen stattfindet, erhöhte Biomassekonzentrationen erzielen, die im Vergleich zu früheren Verfahren eine Leistungssteigerung um das Mehrfache erlauben. Die vollständige Fest-Flüssig-Trennung ermöglicht die Einhaltung extrem hoher Reinigungsgrade, die bis zur Rückhaltung sämtlicher Bakterien geht. Die Druckverhältnisse bei der Umsetzung und bei der Filtration lassen sich weitgehend einheitlich einstellen, so daß die aktive Biomasse keinen zu starken Differenzdrücken ausgesetzt wird, die zu ihrer Schädigung führen könnten.

Im Abwasser gelöste biologisch schwer oder nicht abbaubare organische Inhaltsstoffe sowie organische und anorganische Inhaltsstoffe mit gegenüber der Membrantrenngrenze kleinerer Partikelgröße sind noch in dem vom biologischen Schlamm abgetrennten behandelten Abwasser enthalten, wodurch die das behandelte Abwasser aufnehmenden natürlichen Gewässer belastet werden oder eine weitere industrielle Verwendbarkeit des behandelten Abwassers eingeschränkt ist.

## ERFINDUNG

Ein Ziel der Erfindung ist es daher, ein Verfahren zur biologischen Reinigung von mit biologisch schwer oder nicht abbaubaren Inhaltsstoffen organisch belasteten Abwässern anzugeben, bei dem auch die biologisch schwer oder nicht abbaubaren Inhaltsstoffe einer biologischen Reinigung zugänglich gemacht und in unschädliche Produkte umgesetzt werden.

Ein weiteres Ziel der Erfindung ist es, ein Verfahren zur biologischen Reinigung von mit biologisch schwer oder nicht abbaubaren Inhaltsstoffen organisch belasteten Abwässern zu schaffen, bei dem die biologisch schwer oder nicht abbaubaren Inhaltsstoffe soweit chemisch und/oder physikalsich aufbereitet werden, daß sie vom Abwasser getrennt werden können.

Ein weiteres Ziel der vorliegenden Erfindung ist es, ein Verfahren zur biologischen Reinigung von mit biologisch schwer oder nicht abbaubaren Inhaltsstoffen organisch belasteten Abwässern zu schaffen, bei dem die biologisch schwer oder nicht abbaubaren Inhaltsstoffe durch chemische und/oder physikalische Behandlung aufbereitet werden, so daß die Inhaltsstoffe mikrobiell umsetzbar sind und in biologisch unschädliche Stoffwechselprodukte und körpereigene Substanz umgewandelt oder in aufkonzentrierter Form zusammen mit anorganischen Stoffen ausgeschleust werden können.

Ein weiteres Ziel der Erfindung ist es, eine Vorrichtung zur Durchführung eines derartigen Verfahrens anzugeben.

Gemäß einem ersten Aspekt der Erfindung wird ein Verfahren zur biologischen Reinigung von mit biologisch schwer oder nicht abbaubaren Inhaltsstoffen organisch belasteten Abwässern geschaffen, bei dem die biologisch schwer oder nicht abbaubaren Inhaltsstoffe zu einem Konzentrat aufkonzentriert, das Konzentrat physikalisch und/oder chemisch behandelt und das behandelte Konzentrat einer biologischen Behandlung zugeführt wird. Bei der physikalischen und/oder chemischen Behandlung werden die biologisch schwer oder nicht abbaubaren organischen Stoffe so weit destruiert, bis die Destruktionsprodukte einem biologischen Abbau zugänglich sind und/oder gemeinsam mit anorganischen Stoffen über Adsorption bzw. Fällungs-/Flockungsreaktionen entnommen und das so behandelte Konzentrat einer biologischen Behandlung zugeführt werden können.

Gemäß einem zweiten Aspekt der Erfindung wird ein Verfahren zur biologischen Reinigung von mit biologisch schwer oder nicht abbaubaren Inhaltsstoffen organisch belasteten Abwässern geschaffen, bei dem die biologisch schwer oder nicht abbaubaren Inhaltsstoffe zu einem Konzentrat aufkonzentriert, das Konzentrat physikalisch und/oder chemisch behandelt und das behandelte Konzentrat vom zu reinigenden Abwasser getrennt wird.

Durch die bei dem erfindungsgemäßen Verfahren vorgesehene Aufkonzentrierung der biologisch schwer oder nicht abbaubaren Inhaltsstoffe und die physikalische und/oder chemische Behandlung werden die Inhaltsstoffe so verändert, daß sie entweder einer biologischen Reinigung in Form einer mikrobiellen Umsetzung zugänglich gemacht und in biologisch unschädliche Stoffwechselprodukte und körpereigene Substanz umgewandelt werden oder in aufkonzentrierter Form ausgeschleust werden können.

Von besonderem Vorteil ist es, die Aufkonzentrierung durch Filtration in einer Membranfiltereinrichtung, vorzugsweise einer Nanofiltereinrichtung auszuführen. Dadurch wird ein nahezu vollständiger Rückhalt organischer, nach biologischer Vorbehandlung im wesentlichen aller biologisch schwer oder nicht abbaubaren Inhaltsstoffe erzielt, so daß mit dem behandelten Abwasser lediglich niedermolekular gelöste Inhaltsstoffe, vor allem Salze ausgetragen werden, wobei Rückhalt und Austrag durch die Auswahl geeigneter Membranen variiert werden können. Der Rückhalt anorganischer Inhaltsstoffe wird begrenzt durch die stoffspezifische Wirksamkeit der physikalisch/chemischen Verfahren, die diese Stoffe durch Adsorptions- und Fällungs-/Flockungsreaktionen aus dem Konzentrat entnehmen.

Im gereinigten Abwasser sind nach biologischer Klärung und Feststoffabtrennung überwiegend und bei sehr guter Reinigung fast ausschließlich Stoffe enthalten, die auch bei ausreichend langer Kontaktzeit mit der Biomasse biologisch nicht oder nur sehr schwer abgebaut werden können. Dies ist umso bedeutsamer, als für viele dieser Reststoffe die Möglichkeit eines biologischen Abbaus oder einer anderen umweltunschädlichen Elimination im Gewässer gering ist. Vorteilhafterweise ermöglicht die vorliegende Erfindung die Entfernung auch dieser Stoffe aus dem Abwasser als bedeutsame Maßnahme der Gewässerreinhaltung, was insbesondere auf die Verwendung einer Membranfiltration, vorzugsweise Nanofiltration zurückzuführen ist.

In den bekannten Durchlaufkläranlagen ablaufende konzentrationsabhängige biologische, physikalische und chemische Reaktionen erfordern lange Reaktionszeiten oder einen hohen Überschuß an Chemikalien, wenn die im Reaktionsraum eingestellten niedrigen Restkonzentrationen an organischen oder anorganischen Abwasserinhaltsstoffen gleichzeitig sowohl das geforderte Reinigungsziel sicherstellen sollen, als auch wegen der verbleibenden niedrigen Konzentrationsdifferenzen als treibende Kraft für die biologischen, physikalischen und chemischen Reaktionen für die langen Reaktionszeiten verantwortlich sind. Wegen dieser Kopplung führen niedrigere Restkonzentrationen zu großen Bauvolumina und zu hohen spezifischen Kosten für Energie bzw. Chemikalien, weswegen Verfahren mit dieser Kopplung an wirtschaftliche Grenzen stoßen.

Vorteilhafterweise trennt das erfindungsgemäße Verfahren diese Kopplung von Reinigungsziel und Reaktionskinetik, indem es das ausgezeichnete Rückhaltevermögen der Nanofiltration für organische Stoffe dazu benutzt, in der Form des Permeats ein sehr weitgehend gereinigtes Wasser zu erzeugen, dessen Qualität weitgehend unabhängig von Vorbehandlungsstufen bzw. der Konzentratbehandlung ist. Gleichzeitig vorteilhaft ist damit verknüpft, daß die im Filtrat zurückgehaltenen Stoffe in konzentrierter Form anfallen, wobei die Konzentration der rückgehaltenen Stoffe durch mehrfache Rückführung bis zur gewünschten und zweckmäßigen Höhe gesteigert werden kann. Es ist von besonderem Vorteil, daß die aufkonzentrierten Inhaltsstoffe - unabhängig von den niedrigen Konzentrationen im Permeat - in den weiteren chemisch/physikalischen und/oder biologischen Behandlungsstufen wegen der hohen Konzentration und den damit verknüpften höheren Reaktionsgeschwindigkeiten besonders effizient umgewandelt und/oder biologisch abgebaut werden können.

Eine besonders hohe Reinigungswirkung wird erreicht, wenn die Aufkonzentrierung in mehreren hintereinandergeschalteten Membranfiltereinrichtungen, vorzugsweise Nanofiltereinrichtungen ausgeführt wird.

Es ist besonders vorteilhaft, die Aufkonzentrierung der schwer oder nicht abbaubaren Stoffe wie auch anorganische Stoffe kontinuierlich in einem ein- oder mehrstufigen Prozeß bis zum Erreichen einer vorgegebenen erwünschten und beliebig einstellbaren Konzentration durchzuführen und das bei der Filtration anfallende Permeat beim Erreichen eines vorgegebenen Rückhaltungszieles der schwer oder nicht abbaubaren Stoffe als gereinigtes Abwasser abzuleiten bzw. im Falle eines noch nicht ausreichenden Rückhaltungsgrades einer zweiten oder weiteren Behandlungsstufe mit weitergehender Trennschärfe zuzuführen, bis das Reinigungsziel erreicht ist und das Permeat als gereinigtes Abwasser abgeleitet werden kann.

Als besonders wirkungsvoll hat es sich erwiesen, das Konzentrat mit UV-Strahlung und/oder einem chemischen Oxidationsmittel zu behandeln. Durch die Behandlung mit UV-Strahlung und einem chemischen Oxidationsmittel wie Ozon oder $H_2O_2$ wird besonders reaktiver atomarer Sauerstoff dazu benutzt, z.B. Halogenkohlenwasserstoffe in Halogenid und umweltverträgliche Stoffe umzuwandeln. Ebenso werden langkettige und zyklische Kohlenwasserstoffe aufgebrochen und in biologisch abbaubare Stoffe umgewandelt. Es ist ein besonderer Vorteil der Destruktion biologisch nicht abbaubarer organischer Inhaltsstoffe mittels dieser Verfahren, daß dabei keine Reststoffe anfallen. Es ist ferner ein besonderer Vorteil des erfindungsgemäßen Verfahrens, daß die Destruktion mittels dieser Verfahren bei den vorher gezielt eingestellten hohen Konzentrationen besonders effizient ablaufen kann und mit einem Minimalaufwand nur so weit getrieben werden braucht, daß sich in dem aus biologischer Behandlung, Nanofiltration und chemisch/physikalischer Behandlung gebildeten Kreislauf keine störend hohen Stoffkonzentrationen aufbauen.

Alternativ oder zusätzlich kann das Konzentrat insbesondere mit einem Adsorptionsmittel oder mit einem Flockungs- und/oder Fällungsmittel behandelt werden.

Gemäß dem zweiten Aspekt der Erfindung kann das Verfahren vorteilhafterweise so gestaltet werden, daß das Konzentrat durch Adsorption, Flockung und/oder Fällung der biologisch nicht abbaubaren Inhaltsstoffe behandelt und der entstehende Adsorptions-, Flockungs- und/oder Fällungsschlamm, an den die biologisch nicht abbaubaren Inhaltsstoffe gebunden sind, nach der chemisch/physikalischen Behandlung entfernt wird. Auf diese Weise ist es möglich, im zu reinigenden Abwasser gelöste oder dispergierte persistente Stoffe, wie z.B. Schwermetalle, aufzukonzentrieren und als Konzentrat für weitere chemische oder physikalische Verfahren wie Adsorption an Aktivkohle, Bentonit oder andere chemische Prozesse mittels Flockungs- und Fällungsreaktionen in eine abscheidbare Form zu überführen und dem zu reinigenden Abwasser zu entziehen.

Zweckmäßigerweise wird das behandelte Konzentrat einer aeroben biologischen Abwasserreinigung zugeführt, wo eine mikrobielle Umsetzung in biologisch unschädliche Stoffwechselprodukte und körpereigene Substanz erfolgt. Alternativ kann das behandelte Konzentrat zur Reinigung auch einer anaeroben Abwasserreinigung zugeführt werden.

Von besonderem Vorteil ist es, vor der Abtrennung und Aufkonzentrierung der biologisch schwer oder nicht abbaubaren Inhaltsstoffe eine biologische Abwasserreinigung vorzunehmen. Dadurch wird erreicht, daß alle biologisch leicht abbaubaren Inhaltsstoffe bereits durch biologische Umsetzung aus dem zu reinigenden Abwasser entzogen sind, so daß sich die Abtrennung und Aufkonzentrierung auf die biologisch schwer oder nicht abbaubaren Inhaltsstoffe beschränkt und somit eine hohe Wirkung des erfindungsgemäßen Verfahrens erreicht wird.

Zum Regenerieren der für die Aufkonzentrierung durch Filtration vorgesehenen Membran- oder Nanofiltereinrichtung werden vorzugsweise Spülintervalle vorgesehen.

Die physikalische und/oder chemische Behandlung des Konzentrats kann diskontinuierlich oder kontinuierlich erfolgen. Von besonderem Vorteil ist es dabei, die Aufkonzentrierung und die physikalische/chemische Behandlung eines Konzentratteilstromes kontinuierlich vorzunehmen, was insbesondere bei Aufkonzentrierung in mehreren hintereinandergeschalteten Filtereinrichtungen von Vorteil ist.

Gemäß einer besonders vorteilhaften Weiterbildung des Verfahrens wird das behandelte Konzentrat einer biologischen Abwasserreinigungsanlage zugeführt, bei der eine mikrobielle Umsetzung unter Überdruck ausgeführt und das behandelte Abwasser durch Membran- oder Ultrafiltration vom biologischen Schlamm getrennt wird. Dabei ist insbesondere die Anwendung des in der DE 37 09 174 C2 beschriebenen Verfahrens von Vorteil, wonach die mikrobielle Umsetzung unter Überdruck ausgeführt und die Abtrennung des behandelten Abwassers vom biologischen Schlamm durch Filtration in einem Ultrafilter vorgenommen wird.

Die Verwendung einer derartigen Abwasserreinigungsanlage, bei der eine mikrobielle Umsetzung unter Überdruck ausgeführt und das behandelte Abwasser durch Membran- und/oder Ultrafiltration vom biologischen Schlamm getrennt wird, wie sie in der DE 37 09 174 C2 beschrieben ist, ist insbesondere von Vorteil zur biologischen Reinigung des Abwassers vor der Abtrennung und Aufkonzentrierung der biologisch schwer oder nicht abbaubaren Inhaltsstoffe.

Mittels des in der DE 37 09 174 C2 beschriebenen Verfahrens ist eine praktisch vollständige Fest-Flüssig-Trennung des biologischen Schlamms vom Abwasser nach Durchführung einer biologischen Reinigung möglich, sei es vor der Aufkonzentrierung oder sei es zur weiteren biologischen Aufbereitung des bereits physikalisch oder chemisch behandelten Konzentrats, wobei die Trennung weitgehend unabhängig von den physikalischen Eigenschaften der auftretenden Mikroorganismen ist.

Zur Durchführung des Verfahrens wird gemäß der Erfindung eine Vorrichtung vorgesehen, die einen der Aufkonzentrierung der biologisch schwer oder nicht abbaubaren Inhaltsstoffe des Abwassers dienenden Filtrationsvorlagebehälter und eine daran angeschlossene Membran- oder Nanofiltrationseinrichtung aufweist, in der die biologisch schwer oder nicht abbaubaren Inhaltsstoffe zurückgehalten werden und der eingangsseitig das Abwasser mit den aufzukonzentrierenden biologisch schwer oder nicht abbaubaren Inhaltsstoffen zugeführt und von der ausgangsseitig das gereinigte Abwasser abgeleitet wird.

Vorteilhafterweise ist der erfindungsgemäßen Vorrichtung eine biologische Abwasserreinigungsanlage vorgeschaltet, wie sie in der DE 37 09 174 C2 beschrieben ist, die einen der mikrobiellen Umsetzung der biologisch abbaubaren Inhaltsstoffe des Abwassers dienenden, druckbeaufschlagten Bioreaktor, dem eingangsseitig das sowohl die biologisch abbaubaren als auch die biologisch schwer oder nicht abbaubaren Inhaltsstoffe enthaltende Abwasser zugeführt wird und eine an den Bioreaktor angeschlossene, den im Bioreaktor entstehenden biologischen Schlamm zurückhaltende Membranfiltrations- oder Ultrafiltrationseinrichtung, die eingangsseitig an den Bioreaktor angeschlossen ist und von der ausgangsseitig das vom biologischen Schlamm gereinigte Abwasser abgeleitet und dem der Aufkonzentrierung der biologisch schwer oder nicht abbaubaren Inhaltsstoffe des Abwassers dienenden Filtrationsvorlagebehälter zugeführt wird, enthält.

Die Überwachung der Beschaffenheit des Konzentrats erfolgt vorteilhafterweise kontinuierlich durch Leitfähigkeitsbestimmung, Trübungsmessung oder eine Analysatorvorrichtung.

Gemäß einer besonders vorteilhaften Weiterbildung der Erfindung ist eine Einrichtung zur naßchemischen Oxidation, wie eine Kombination einer UV-Belichtungseinrichtung und einer ein Oxidationsmittel wie Ozon oder $H_2O_2$ abgebenden Einrichtung zur Destruktion der biologisch schwer oder nicht abbaubaren Inhaltsstoffe nach Erreichen einer vorgegebenen Konzentration derselben vorgesehen.

Zur Entfernung von persistenten Inhaltsstoffen, wie Schwermetallen wird gemäß einer anderen Weiterbildung der erfindungsgemäßen Vorrichtung ein Reaktionsbehälter vorgesehen, in dem diese Inhaltsstoffe nach Erreichen einer vorgegebenen Konzentration der biologisch schwer oder nicht abbaubaren Inhaltsstoffe adsorptiv z.B. mit Aktivkohle, Bentonit oder mit einem Flockungs- und/oder Fällungsmittel einer weiteren Aufkonzentrierung unterzogen und aus der chemisch/physikalischen Behandlungsstufe entfernt werden. Die naßchemische Oxidation erfolgt vorteilhafterweise kontinuierlich unter Behandlung eines Teilstromes des Konzentrats.

Schließlich können mehrere Filtrationsstufen zur Aufkonzentrierung der biologisch schwer oder nicht abbaubaren Inhaltsstoffe vorgesehen sein.

Im folgenden wird die Erfindung anhand eines Ausführungsbeispiels beschrieben, wobei sich aus der Beschreibung weitere Merkmale, Einzelheiten und Vorteile der Erfindung ergeben, die Erfindung jedoch keinesfalls auf die in der Beschreibung angegebenen Einzelheiten beschränkt ist.

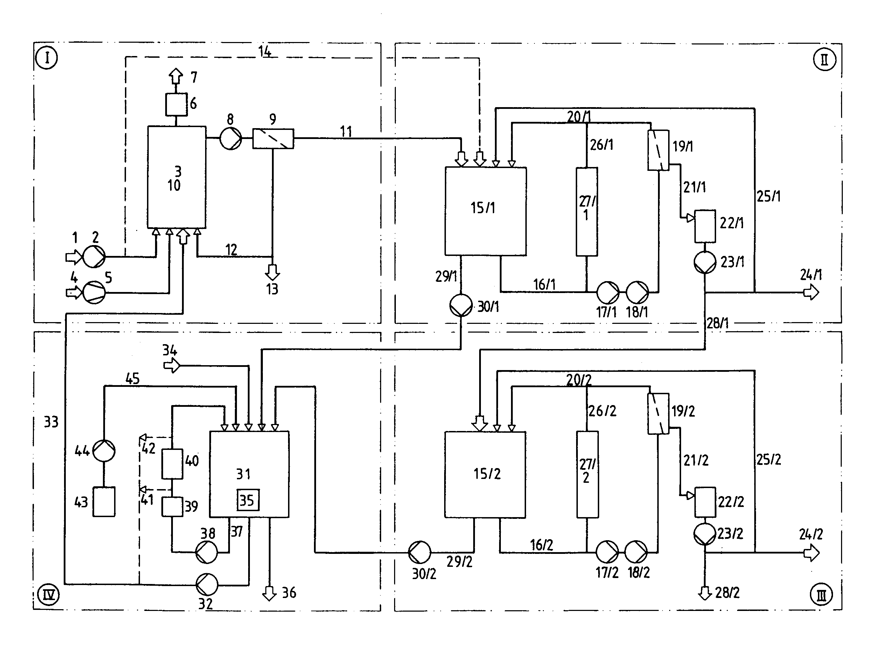

KURZBESCHREIBUNG DER ABBILDUNG

Die Figur zeigt eine schematische Darstellung einer Vorrichtung zur Durchführung des erfindungsgemäßen Verfahrens, wobei in dem mit I kenntlich gemachten Teil der Figur eine Stufe zur biologischen Behandlung des zu reinigenden Abwassers vor der Aufkonzentration, in den mit II und III kenntlich gemachten Teilen der Figur Stufen zur Abtrennung und Aufkonzentration der biologisch schwer oder nicht abbaubaren Inhaltsstoffe und in dem mit IV kenntlich gemachten Teil der Figur eine Stufe zur physikalischen und chemischen Behandlung des Konzentrats gezeigt sind.

BESTER WEG ZUR AUSFÜHRUNG DER ERFINDUNG

Wie aus der einzigen Figur der Zeichnung hervorgeht, wird in der für die biologische Behandlung der im zu reinigenden Abwasser enthaltenen biologisch leicht abbaubaren Inhaltsstoffe vorgesehenen Behandlungsstufe das zusätzlich mit biologisch schwer oder nicht abbaubaren Inhaltsstoffen organisch belastete Abwasser 1 mittels einer Zulaufpumpe 2 einem Bioreaktor 3 zugeleitet. Dem Bioreaktor, in dem Abwasserinhaltsstoffe biologisch abgebaut werden, wird bei aerober Behandlung Luft 4, die mittels eines Kompressors 5 komprimiert wird, zugeführt. Bei anaerober Behandlung wird der Systemdruck durch die Faulgasproduktion bewirkt. Ein am Bioreaktor angeschlossenes Druckhalteventil 6 dient der Ableitung des bei der aeroben Behandlung im Bioreaktor 3 verbrauchten bzw. im Falle anaerober Behandlung gebildeten Gases 7.

An dem Bioreaktor ist über eine Filterpumpe 8 eine Membran- oder Ultrafiltrationseinrichtung 9 angeschlossen, die mit biologischem Schlamm 10 aus dem Bioreaktor 3 beschickt wird, welcher bei der mikrobiellen Umsetzung der biologisch leicht abbaubaren Inhaltsstoffe gebildet wird. Die Membran- oder Ultrafiltrationseinrichtung 9 enthält eine semipermeable Filtermembran, die für Wasser und im Wasser gelöste Stoffe durchlässig ist, jedoch alle im Wasser schwebenden oder aufgeschwemmten festen Stoffe wie insbesondere die bei der mikrobiellen Umsetzung gebildeten Schlammpartikel und die im Bioreaktor vorhandenen Mikroorganismen selbst zurückhält. Die Membran der Filtrationseinrichtung 9 hat beispielsweise eine solche Porengröße, daß alle Teilchen zurückgehalten werden, die größer sind als 0,2 $\mu$m. Vorzugsweise ist die Membran so beschaffen, daß alle Teilchen mit einer Größe von mehr als 0,1 $\mu$m zurückgehalten werden. Von besonderem Vorteil schließlich ist es, wenn die Membran so beschaffen ist, daß alle Teilchen mit einer Größe von mehr als 0,02 $\mu$m zurückgehalten werden.

Somit erfolgt in der Membranfiltrationseinrichtung 9 eine Abtrennung des Schlamms 10 vom biologisch gereinigten Abwasser 11. Das in den Bioreaktor zurückgeführte Schlammkonzentrat 12 steht dort wieder für den Bau- und Betriebsstoffwechsel der Mikroorganismen zur Verfügung. Der infolge des Baustoffwechsels der Mikroorganismen gebildete Überschußschlamm 13 wird der biologischen Behandlungsstufe I entnommen.

In einer nachfolgenden Nanofiltrationsstufe, die in der Zeichnung mit II kenntlich gemacht ist, wird das in der biologischen Behandlungsstufe I vorbehandelte Abwasser 11 oder das völlig unbehandelte, direkt von der Zulaufpumpe 2 gelieferte, mit biologisch schwer oder nicht abbaubaren Inhaltsstoffen organisch belastete Abwasser 14 einer weiteren Behandlung zugeführt.

Das biologisch behandelte 11 bzw. unbehandelte 14 Abwasser wird zunächst in eine Filtrationsvorlage 15/1 geleitet, in der eine Aufkonzentrierung dadurch erfolgt, daß das Abwasser 16/1 über eine Vordruckpumpe 17/1 und eine Filtrationspumpe 18/1 einer Membran-/Nanofiltrationseinrichtung 19/1 zugeführt wird. Die Membran-/Nanofiltrationseinrichtung 19/1 enthält eine semipermeable Membran, die so beschaffen ist, daß sie nur für Teilchen durchlässig ist, die wesentlich kleiner sind als die von der Ultrafiltrationseinrichtung 9 der biologischen Behandlungsstufe I zurückgehaltenen, oder in anderen Worten eine gegenüber der Ultrafiltrationseinrichtung 9 gesteigerte Trennschärfe hat. Die Membran-/Nanofiltrationseinrichtung 19/1 ist beispielsweise so beschaffen, daß im Abwasser enthaltenes NaCl zu 30 bis 70% zurückgehalten wird.

Auf diese Weise werden in der Membran-/Nanofiltrationseinrichtung 19/1 biologisch schwer abbaubare oder nicht abbaubare Inhaltsstoffe im Retentatstrom 20/1 zurückgehalten und aufkonzentriert, wonach das gereinigte Permeat 21/1 über eine Permeatvorlage 22/1 gesammelt wird. Entsprechend den Anforderungen wird der Permeatstrom mittels einer Permeatpumpe 23/1 und Ventilregelungen unterschiedlich geschaltet.

Entspricht das Permeat den Reinigungsanforderungen, so kann es aus der Anlage als gereinigtes Abwasser 24/1 abgeleitet werden. Da die Permeatleistung so ausgelegt ist, daß mehr Permeat 21/1 gebildet als der Anlage als Zulauf 11 bzw. 14 zugeführt wird, muß aus betrieblichen Gründen der Permeatüberschuß 25/1 in die Filtrationsvorlage 15/1 zurückgeführt werden. Ist in der Filtrationsvorlage 15/1 das Aufkonzentrierungsziel erreicht, welches beispielsweise kontinuierlich über Leitfähigkeits-, Trübungsmessung oder mittels einer Autoanalysationseinrichtung kontrolliert werden kann, so wird das Konzentrat entweder diskontinuierlich bzw. chargenweise oder ein Teilstrom kontinuierlich als Konzentrat 29/1 mittels einer Konzentratpumpe 30/1 der chemischen und/oder physikalischen Behandlungsstufe IV zugeführt.

Fällt die Filterleistung der Nanofiltration 19/1 ab, so kann mittels eines Spülkreislaufs 26/1, der von einer Spülvorlage 27/1 aus mit Wasser oder Permeat, das mit Reinigungsmitteln versetzt ist, gespeist ist, die Filtereinrichtung durch entsprechende Ventilsteuerung wieder freigespült werden.

Entspricht das Permeat 24/1 nicht den Reinigungsanforderungen, so kann der Ablauf 28/1 der 1. Nanofiltrationsstufe II einer Nanofiltrationsstufe III zugeführt werden.

Die Nanofiltrationsstufe III ist im gezeigten Ausführungsbeispiel funktionsgleich wie die Nanofiltrationsstufe II, wobei in der Zeichnung entsprechende Komponenten mit gleichen Bezugszeichen bezeichnet sind, die an ihrem Ende lediglich anstelle .../1 mit .../2 kenntlich gemacht sind.

Bei dem gezeigten Ausführungsbeispiel ist eine Nanofiltrationsstufe III mit einer Nanofiltrationseinrichtung 19/2 vorgesehen, die funktionsgleich wie die Nanofiltrationseinrichtung 19/1 der Nanofiltrationsstufe II ist, jedoch verfügt sie über eine noch größere Trennschärfe. So kann die Nanofiltrationseinrichtung 19/2 der Nanofiltrationsstufe III beispielsweise so beschaffen sein, daß im Abwasser enthaltenes NaCl zu 50 bis 90% zurückgehalten wird. Der Verfahrensverlauf entspricht dem aus der 1. Nanofiltrationsstufe II.

Diese Anordnung mit mehreren funktionsgleichen Einheiten im dargestellten Ausführungsbeispiel gestattet in mehrstufiger Ausführung die Hintereinanderschaltung immer schärferer Membrantrenngrenzen, bis schließlich der geforderte Rückhalt der biologisch schwer oder nicht abbaubaren Inhaltsstoffe des organisch belasteten Abwassers erreicht ist.

Die Nanofiltrationseinrichtungen 19/1 bzw. 19/2 sind für das erfindungsgemäße Verfahren so ausgebildet, daß ein nahezu vollständiger Rückhalt aller biologisch relevanten, schwer oder nicht abbaubaren Inhaltsstoffe erreicht wird, so daß mit dem behandelten Abwasser lediglich niedermolekular gelöste Inhaltsstoffe, vor allem Salze ausgetragen werden.

Wahlweise kann auch nur eine einzige Nanofiltrationsstufe II vorgesehen sein, deren Nanofiltrationseinrichtung 19/1 jedoch über die erhöhte Trennschärfe der Nanofiltrationseinrichtung 19/2 der Nanofiltrationsstufe III verfügt, was insbesondere dann von Vorteil ist, wenn das zu reinigende Abwasser zwar von allen Teilchen bis hin zu der im Zusammenhang mit der Nanofiltrationsstufe III genannten sehr kleinen Teilchengröße gereinigt werden soll, diese Teilchen (biologisch schwer oder nicht abbaubare Inhaltsstoffe) jedoch nur in einer verhältnismäßig geringen Konzentration vorliegen.

Die Konzentrate 29/1 bzw. 29/2 werden mittels Konzentratpumpen 30/1 bzw. 30/2 einem Reaktionsbehälter 31 in einer Stufe IV zur physikalischen oder chemischen Behandlung des Konzentrats zugeführt.

Die Stufe IV zur physikalischen und/oder chemischen Behandlung des Konzentrats enthält neben dem Reaktionsbehälter 31 einen durch eine Reaktionspumpe 38, eine UV-Bestrahlungseinrichtung 39 und eine Ozonbehandlungseinrichtung 40 gebildeten Reaktionskreislauf, der durch den Reaktionsbehälter 31 geschlossen wird. Weiter ist an den Reaktionsbehälter 31 eine Chemikalienpumpe 44 über eine Chemikalienleitung 45 angeschlossen, so daß aus einer Chemikalienzuführungseinrichtung 43 Flockungs- oder Fällungschemikalien oder andere Mittel zur chemischen oder physikalischen Behandlung des Konzentrats zugeführt werden können. Als solche Stoffe kommen insbesondere übliche Flockungs- und Fällungsmittel sowie Adsorptionsmittel, wie Aktivkohle, Bentonit oder ähnliches in Frage. Solche Chemikalien oder Behandlungsmittel können auch über eine Zugabeeinrichtung 34 in den Reaktionsbehälter 31 zugeführt werden. Durch die genannten Stoffe lassen sich adsorbierbare, persistente und biologisch schwer abbaubare Stoffe adsorbieren, in eine abscheidbare Form bringen und entnehmen oder so weit destruieren, daß das nun biologisch zugängliche Konzentrat 33 mit einer Beschickungspumpe 32 in den Bioreaktor 3 der biologischen Behandlungsstufe I zugegeben werden kann. Der Reaktionsbehälter 31 wird hierzu mit einem Rührwerk 35 umgewälzt und die adsorbierten oder chemisch gebundenen Inhaltsstoffe anschließend in durch Absetzen oder Filtration aufkonzentrierter Form aus dem System ausgetragen 36.

Zusätzlich zu der chemischen und/oder physikalischen Behandlung durch die bei 43 bzw. 34 zugegebenen Behandlungsmittel können oxidativ veränderbare, biologisch schwer oder nicht abbaubare Inhaltsstoffe durch Anwendung von Oxidationsmitteln entsprechend destruiert werden. Dies geschieht dadurch, daß das Konzentrat 37 über die Reaktionspumpe 38 durch die UV-Bestrahlungseinrichtung 39 und anschließend durch die Ozonbehandlungseinrichtung 40 gepumpt und dort behandelt wird. Oxidationsmittel lassen sich auch aus der Chemikalienzuführungseinrichtung 43 über die Pumpe 44 und die Leitung 45 in den Reaktionsbehälter 31 einbringen.

Bei kontinuierlicher Behandlung kann das behandelte Konzentrat 33 über die Beschickungspumpe 32, nach der UV-Bestrahlungseinrichtung 39 über die Leitung 41 oder nach der Ozonbehandlungseinrichtung 40 über die Leitung 42 in den Biorektor 3 in der biologischen Behandlungsstufe II zurückgeführt werden. Auf diese Weise können die Behandlungsstufen I bis IV zu einem quasi-geschlossenen Kreislauf geschlossen werden, in dem eine kontinuierliche Behandlung des zu reinigenden Abwassers erfolgt, das bei 1 zugeführt wird. Die sich bei dieser kontinuierlichen Behandlung ergebenden Produkte werden in der jeweiligen Behandlungsstufe abgegeben, nämlich das überschüssige Gas und der biologische Schlamm aus der biologischen Behandlungsstufe I bei 7 bzw. 13, das gereinigte Abwasser aus den Nanofiltrationsstufen II und III bei 24/1 bzw. 24/2 und 28/2, sowie das chemisch und/oder physikalisch behandelte Konzentrat aus der Behandlungsstufe IV bei 36, wobei dies jedoch im einzelnen vom gewählten Verfahrensablauf abhängig ist.

GEWERBLICHE ANWENDBARKEIT

Der Gegenstand der Erfindung ist gewerblich anwendbar zur Reinigung von mit biologisch schwer oder nicht abbaubaren Inhaltsstoffen belasteten Abwässern.

**Patentansprüche**

1.  Verfahren zur biologischen Reinigung von mit biologisch schwer oder nicht abbaubaren Inhaltsstoffen organisch belasteten Abwässern, **dadurch gekennzeichnet,** daß die biologisch schwer oder nicht abbaubaren Inhaltsstoffe abgetrennt und zu einem Konzentrat aufkonzentriert, das Konzentrat physikalisch und/oder chemisch behandelt und das behandelte Konzentrat einer biologischen Umsetzung unterzogen wird.

2.  Verfahren zur biologischen Reinigung von mit biologisch schwer oder nicht abbaubaren Inhaltsstoffen organisch belasteten Abwässern, **dadurch gekennzeichnet,** daß die biologisch schwer oder nicht abbaubaren Inhaltsstoffe zu einem Konzentrat aufkonzentriert, das Konzentrat physikalisch und/oder chemisch behandelt und das behandelte Konzentrat vom zu reinigenden Abwasser getrennt wird.

3. Verfahren nach Anspruch 1 oder 2, **dadurch gekennzeichnet,** daß die Abtrennung und Aufkonzentrierung durch Filtration in einer Membranfiltereinrichtung, vorzugsweise Nanofiltereinrichtung ausgeführt wird.

4. Verfahren nach Anspruch 3, **dadurch gekennzeichnet,** daß die Abtrennung und Aufkonzentrierung in einer Membranfiltereinrichtung erfolgt, die so ausgebildet ist, daß im Abwasser gelöstes NaCl zu 30 bis 70% zurückgehalten wird.

5. Verfahren nach Anspruch 3, **dadurch gekennzeichnet,** daß die Abtrennung und Aufkonzentrierung in einer Membranfiltereinrichtung erfolgt, die so ausgebildet ist, daß im Abwasser gelöstes NaCl zu 50 bis 90% zurückgehalten wird.

6. Verfahren nach einem der Ansprüche 1 bis 5, **dadurch gekennzeichnet,** daß die Aufkonzentrierung in mehreren hintereinandergeschalteten Membranfiltereinrichtungen, vorzugsweise Nanofiltereinrichtungen ausgeführt wird.

7. Verfahren nach einem der Ansprüche 1 bis 6, **dadurch gekennzeichnet,** daß die Aufkonzentrierung der schwer oder nicht abbaubaren Stoffe kontinuierlich in einem ein- oder mehrstufigen Prozess bis zum Erreichen einer vorgegebenen, einstellbaren Konzentration durchgeführt und das bei der Filtration anfallende Permeat beim Erreichen eines vorgegebenen Rückhaltungsgrades der schwer oder nicht abbaubaren Stoffe als gereinigtes Abwasser abgeleitet oder im Falle eines noch nicht ausreichenden Rückhaltungsgrades einer zweiten oder weiteren Behandlungsstufe mit weitergehender Trennschärfe zugeführt wird, bis das Reinigungsziel erreicht ist und das Permeat als gereinigtes Abwasser abgeleitet werden kann.

8. Verfahren nach einem der Ansprüche 1 bis 7, **dadurch gekennzeichnet,** daß das Konzentrat mit UV-Strahlung und/oder einem chemischen Oxidationsmittel behandelt wird.

9. Verfahren nach einem der Ansprüche 1 bis 8, **dadurch gekennzeichnet,** daß das Konzentrat mit einem Adsorptionsmittel sowie mit einem Flockungs- und/oder Fällungsmittel behandelt wird.

10. Verfahren nach einem der Ansprüche 1 bis 9, **dadurch gekennzeichnet,** daß das physikalisch und/oder chemisch behandelte Konzentrat einer biologischen Abwasserreinigungsanlage zur aeroben Umsetzung zugeführt wird.

11. Verfahren nach einem der Ansprüche 1 bis 9, **dadurch gekennzeichnet,** daß das physikalisch und/oder chemisch behandelte Konzentrat einer biologischen Abwasserreinigungsanlage zur anaeroben Umsetzung zugeführt wird.

12. Verfahren nach einem der Ansprüche 1 bis 11, **dadurch gekennzeichnet,** daß vor der Abtrennung und Aufkonzentrierung der biologisch schwer oder nicht abbaubaren Inhaltsstoffe eine biologische Abwasserreinigung vorgenommen wird.

13. Verfahren nach einem der Ansprüche 3 bis 12, **dadurch gekennzeichnet,** daß die Membran- oder Nanofiltereinrichtung zum Zwecke der Regenerierung in Intervallen gespült wird.

14. Verfahren nach einem der Ansprüche 1 bis 13, **dadurch gekennzeichnet,** daß die Aufkonzentrierung und die physikalische und/oder chemische Behandlung des Konzentrats diskontinuierlich erfolgt.

15. Verfahren nach einem der Ansprüche 1 bis 14, **dadurch gekennzeichnet,** daß die Aufkonzentrierung und die physikalische/chemische Behandlung eines Teilstromes des Konzentrats kontinuierlich erfolgt.

16. Verfahren nach einem der Ansprüche 10 oder 11, **dadurch gekennzeichnet,** daß das physikalisch und/oder chemisch behandelte Konzentrat einer biologischen Abwasserreinigungsanlage zugeführt wird, bei der eine mikrobielle Umsetzung unter Überdruck ausgeführt und das behandelte Abwasser durch Membran- oder Ultrafiltration vom biologischen Schlamm getrennt wird.

17. Verfahren nach einem der Ansprüche 12 bis 16, **dadurch gekennzeichnet,** daß vor der Aufkonzentrierung der biologisch schwer oder nicht abbaubaren Inhaltsstoffe eine biologische Umsetzung der im Abwasser enthaltenen biologisch abbaubaren Inhaltsstoffe in einer Abwasserreinigungsanlage erfolgt, bei der eine mikrobielle Umsetzung unter Überdruck ausgeführt und das behandelte Abwasser durch Membran- oder Ultrafiltration vom biologischen Schlamm getrennt wird.

18. Verfahren nach einem der Ansprüche 1 bis 17, **dadurch gekennzeichnet,** daß die Funktionen der Einstellung und Einhaltung niedriger Restgehalte an Abwasserinhaltsstoffen sowie der Elimination der Inhaltsstoffe verfahrensmäßig entkoppelt werden.

19. Verfahren nach einem der Ansprüche 1 bis 18, **dadurch gekennzeichnet,** daß in dem aus biologischer Reinigung, Membran- oder Nanofiltration und physikalisch/chemischer Behandlung gebildeten Wasserkreislauf der Membran- bzw. Nanofiltration die Funktion der Einstellung und Einhaltung gewünschter Restgehalte an Inhaltsstoffen zugeordnet wird.

20. Verfahren nach einem der Ansprüche 1 bis 19, **dadurch gekennzeichnet,** daß in dem aus biologischer Reinigung, Membran- bzw. Nanofiltration und physikalisch/chemischer Behandlung gebildeten Wasserkreislauf der biologischen Reinigung und der physikalisch/chemischen Behandlung die Funktion der Elimination der Abwasserinhaltsstoffe zugeordnet wird.

21. Verfahren nach einem der Ansprüche 1 bis 20, **dadurch gekennzeichnet,** daß durch die verfahrensmäßige Entkopplung der Funktionen "Elimination" und "Einhaltung festgesetzter Gehalte an Abwasserinhaltsstoffen" einer Abwasserreinigung diese Funktion weitgehend unabhängig voneinander gestaltet und optimiert werden.

22. Verfahren nach einem der Ansprüche 1 bis 21, wobei die durch die Membran- bzw. Nanofiltration abgetrennten organischen Stoffe überwiegend bis nahezu vollständig biologisch schwer oder nicht abbaubar sind, **dadurch gekennzeichnet,** daß die danach folgende Destruktion zu biologisch abbaubaren Stoffen (in den Vorrichtungen 31, 39 und 40) nur soweit betrieben wird, daß sich in dem Wasserkreislauf keine störend hohen Stoffkonzentrationen aufbauen.

23. Vorrichtung zur Durchführung des Verfahrens nach einem der Ansprüche 1 bis 22, **gekennzeichnet durch** einen der Aufkonzentrierung der biologisch schwer oder nicht abbaubaren Inhaltsstoffe des Abwassers dienenden Filtrationsvorlagebehälter (15) und eine daran angeschlossene Membran- oder Nanofiltrationseinrichtung (19), in der die biologisch schwer oder nicht abbaubaren Inhaltsstoffe zurückgehalten werden und der eingangsseitig das Abwasser mit den aufkonzentrierten biologisch schwer oder nicht abbaubaren Inhaltsstoffen (29) zugeführt und von der ausgangsseitig das gereinigte Abwasser (24) abgeleitet wird.

24. Vorrichtung nach Anspruch 23, **gekennzeich-**

**net durch** einen der mikrobiellen Umsetzung der biologisch abbaubaren organischen Inhaltsstoffe des Abwassers dienenden, druckbeaufschlagten Bioreaktor (3), dem eingangsseitig das sowohl die biologisch abbaubaren als auch die biologisch schwer oder nicht abbaubaren Inhaltsstoffe enthaltende Abwasser zugeführt wird, und eine an dem Bioreaktor (3) angeschlossene, den im Bioreaktor (3) entstehenden biologischen Schlamm (10, 12) zurückhaltende Membran- oder Ultrafiltrationseinrichtung (9), von der ausgangsseitig das vom biologischen Schlamm befreite Abwasser (11) abgeleitet und dem der Aufkonzentrierung der biologisch schwer oder nicht abbaubaren Inhaltsstoffe des Abwassers dienenden Filtrationsvorlagebehälter (15) zugeführt wird.

25. Vorrichtung nach Anspruch 23 oder 24, **dadurch gekennzeichent,** daß zur kontinuierlichen Überwachung der Konzentratbeschaffenheit eine Leitfähigkeitsbestimmungs-, Trübungsmessungs- oder kontinuierlich zu betreibende Analysatorvorrichtung vorgesehen ist.

26. Vorrichtung nach Anspruch 23, 24 oder 25, **dadurch gekennzeichnet,** daß zur Destruktion der biologisch schwer oder nicht abbaubaren Inhaltsstoffe nach Erreichen einer vorgegebenen Konzentration derselben eine Einrichtung zur naßchemischen Oxidation, wie eine Kombination einer UV-Belichtungseinrichtung (39) und einer ein Oxidationsmittel, wie Ozon oder $H_2O_2$ abgebenden Einrichtung (40) vorgesehen ist.

27. Vorrichtung nach einem der Ansprüche 23 bis 26, **dadurch gekennzeichnet,** daß ein Reaktionsbehälter (31) vorgesehen ist, in dem persistente Inhaltsstoffe, wie Schwermetalle adsorptiv zum Beispiel mit Aktivkohle, Bentonit oder mit einem Flockungs- und/oder Fällungsmittel eine weitere Aufkonzentrierung erfahren und aus der chemischen/physikalischen Behandlungsstufe entfernt werden und in den nach Erreichen einer vorgegebenen Konzentration der biologisch schwer oder nicht abbaubaren Inhaltsstoffe das Konzentrat gepumpt wird.

28. Vorrichtung nach Anspruch 26 oder 27, **dadurch gekennzeichent,** daß der Einrichtung zur naßchemischen Oxidation (39, 40) ein Teilstrom des Konzentrats zugeführt und dieser dort kontinuierlich behandelt wird.

29. Vorrichtung nach einem der Ansprüche 23 bis 28**, dadurch gekennzeichnet,** daß mehrere Filtrationsstufen der in Anspruch 23 angegebenen Art in Hintereinanderschaltung vorgesehen sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 413 356 (OSAKA GAS COMPANY LTD)<br><br>* Seite 11; Ansprüche 1,12,23 *<br>* Seite 3, Zeile 51 - Zeile 58 *<br>--- | 1,8,<br>10-12 | C02F3/12<br>C02F1/44 |
| X | WORLD PATENTS INDEX<br>Section Ch, Week 8040,<br>Derwent Publications Ltd., London, GB;<br>Class C, AN 80-70612C<br>& JP-A-55 109 486 (EBARA INFILCO KK) 22. August 1980<br>* Zusammenfassung *<br>--- | 2,3,8 | |
| X | DE-A-3 811 591 (AQUACHEM, IND.WASSERBEHANDLUNG GMBH)<br>* Spalte 1, Zeile 22 - Spalte 3, Zeile 45 *<br>* Spalte 5; Ansprüche 1-4,8,12,13; Abbildung *<br>--- | 1-3,16,<br>19,20 | |
| A | DE-A-3 815 271 (SANDOZ-PATENT-GMBH)<br><br>* Spalte 1, Zeile 20 - Spalte 2, Zeile 37 *<br>* Spalte 3; Ansprüche 1-4 *<br>--- | 1-12,19,<br>20 | **RECHERCHIERTE SACHGEBIETE (Int. Cl.5)** |
| D,A | DE-A-3 709 174 (WEHRLE-WERK AG)<br><br>* Spalte 1; Ansprüche 1-3,5,7 *<br><br>----- | 1,3,13,<br>17 | C02F<br>C02D<br>B01D |

Der vorliegende Recherchenbericht wurde für alle Patentansprüche erstellt

| Recherchenort | Abschlußdatum der Recherche | Prüfer |
|---|---|---|
| DEN HAAG | 07 NOVEMBER 1991 | TEPLY J. |